# NEUE EUROPÄISCHE PATENTSCHRIFT

(11) **EP 0 814 001 B2**
(45) Veröffentlichungstag und Bekanntmachung des Hinweises auf die Entscheidung über den Einspruch: **03.03.2004**
(45) Hinweis auf die Patenterteilung: 18.10.2000
(21) Anmeldenummer: 97110045.8
(22) Anmeldetag: 19.06.1997
(51) Int. Cl.: B60R 21/22

(54) **Airbagvorrichtung**
Airbag device
Système de sac gonflable

(30) Priorität: 23.06.1996 DE 29610920 U; 08.08.1996 DE 29613781 U
(43) Veröffentlichungstag der Anmeldung: 29.12.1997
(73) Patentinhaber: HS Technik und Design Technische Entwicklungen GmbH, 82234 Wessling (DE)
(72) Erfinder: Specht, Martin, Dipl. Ing (FH), 82340 Feldafing (DE)
(74) Vertreter: Eisenführ, Speiser & Partner

(56) Entgegenhaltungen:
- WO-A-94/19215
- DE-A- 19 515 759
- DE-A- 19 519 297
- DE-U- 29 605 896
- DE-U- 29 605 897
- FR-A- 2 704 510
- GB-A- 2 261 636
- GB-A- 2 278 812
- GB-A- 2 297 950

## Beschreibung

Die Erfindung betrifft eine Airbagvorrichtung nach dem Oberbegriff des Patentanspruches 1.

Eine derartige Airbagvorrichtung ist aus der WO 94/19215 A bekannt. Die bekannte Airbagvorrichtung bietet einen Seitenaufprallschutz im wesentlichen nur im Bereich eines Seitenfensters eines Kraftfahrzeugs. Ferner ist es aus der FR 2,704,510 bei einem Beifahrerairbag bekannt, zur Erreichung einer dichten Packung des gefalteten Gaskissens im Ruhezustand Einschnürungen vorzusehen, die jedoch beim Aufblasen des Gaskissens wieder aufgehen.

Auch bei der aus der EP 0 694 444 A2 bekannten Airbagvorrichtung werden die Insassen von Fahrzeugen insbesondere gegen Kopfverletzungen an seitlichen Rahmenteilen geschützt. Im aufgeblasenen Zustand erstreckt sich dabei die Airbaganordnung vom oberen Dachkantenbereich, insbesondere oberen Tür- bzw. Fensterrahmen, nach unten und bildet auf diese Weise ein Aufprallkissen zwischen den seitlichen Fahrzeugteilen (Fenster, Türrahmen, B-Säule) und insbesondere Kopfbereich des Fahrzeuginsassen.

Aufgabe der Erfindung ist es, eine Vorrichtung der eingangs genannten Art zu schaffen, bei welcher längs der gesamten Fahrzeugseite ein durchgehender Seitenaufprallschutz erreicht wird.

Diese Aufgabe wird erfindungsgemäß durch die kennzeichnenden Merkmale des Patentanspruches 1 gelöst.

Die sich über die gesamte Längsausdehnung der Gaskissenanordnung erstreckende Verspannung gewährleistet, daß auch bei offenen oder zerstörten Fenstern (vorderes und/oder hinteres Seitenfenster) eine einwandfreie Verankerung und Stütze der aufgeblasenen Gaskissenanordnung im gesamten Seitenbereich des Fahrzeugs, d.h. im Bereich des Vordersitzes und im Fonds des Fahrzeugs erzielt wird.

Im Ruhezustand ist die Gaskissenanordnung zu einem kompakten Paket gefaltet, welches sich entlang der seitlichen Dachkante des Fahrzeugs erstreckt. Für die Befestigung der gefalteten Airbaganordnung kann eine Klemmeinrichtung (Keder) verwendet werden, wie sie beispielsweise aus der EP 0 694 444 bekannt ist. Beim Entfalten und Aufblasen der Gaskissenanordnung verkürzt sich diese in ihrer Längsrichtung, wodurch zusätzlich zu der oben liegenden Fixierung der Gaskissenanordnung im Dachkantenbereich eine Verspannung im unteren Bereich der Gaskissenanordnung zwischen dem vorderen und hinteren Verankerungspunkt an der Fahrzeugkarosserie bzw. am Fahrzeugaufbau erreicht wird. Auf diese Weise ist im wesentlichen die gesamte Fläche, welche den Seitenaufprallschutz im vorderen Fahrzeugteil und im hinteren Fahrzeugteil bildet, am Fahrzeugaufbau bzw. an der Fahrzeugkarosserie abgestützt.

Der in Fahrzeuglängsrichtung gebildete Spannungsverlauf wird in der Gaskissenanordnung durch Einschnürungen, welche das jeweilige Gaskissen der Gaskissenanordnung teilweise durchsetzen, erreicht. Vorzugsweise handelt es sich dabei um geradlinig verlaufende Einschnürungen. Die Einschnürungen können durch Abnäher im Gaskissengewebe erreicht werden. In bevorzugter Weise verlaufen die Einschnürungen etwa in Richtung der beim Aufblasen der Gaskissenanordnung sich ergebenden Einblasrichtung. Die Einschnürungen können dabei im unteren Teil der Gaskissenanordnung oder im oberen der seitlichen Dachkante benachbarten Bereich der Gaskissenanordnung vorgesehen sein.

Die Gaskissenanordnung besitzt einen Bereich, welcher ein durch die Einschnürungen bewirktes verringertes Füllvolumen aufweist und einen Bereich, dessen Füllvolumen durch das umgebende Gaskissengewebe bestimmt ist und nicht verringert ist. Auf diese Weise läßt sich mit Hilfe der Einschnürungen und der Anordnung des vorderen und hinteren Verankerungspunktes für die Gaskissenanordnung ein bestimmter Spannungsverlauf in der aufgeblasenen Gaskissenanordnung erreichen. In bevorzugter Weise wird der vordere und hintere Teil der Gaskissenanordnung durch Bänder mit den Verankerungspunkten verbunden.

Die Gaskissenanordnung kann aus einem einzigen Gaskissen bestehen, welches sich seitlich im wesentlichen über die gesamte Länge des Fahrzeuginnenraums erstreckt und in vorteilhafter Weise an der A-Säule und der C-Säule verankert ist. Es ist jedoch auch möglich, die Gaskissenanordnung in mehrere Gaskissen zu unterteilen, die durch Bänder miteinander verbunden sind. Bevorzugt werden zwei Gaskissen verwendet, die gegebenenfalls separat im Dachkantenbereich im gefalteten Zustand montierbar sind.

Die Verkürzung der Luftkissenanordnung in Fahrzeuglängsrichtung zur Erzielung der Verspannung zwischen dem vorderen und hinteren Verankerungspunkt kann ferner durch die Vergrößerung der Breite wenigstens eines Teils der Luftkissenanordnung erreicht werden. Beispielsweise können ein Teil oder mehrere Teile der Luftkissenanordnung zwischen zwei Bändern, die sich im wesentlichen in Längsrichtung der Luftkissenanordnung erstrecken, angeordnet sein, so daß beim Aufblasen des Luftkissenteils bzw. der Luftkissenteile die Bänder vertikal zur Längsrichtung ausgelenkt werden, so daß eine Verkürzung der Bänder in Längsrichtung entsteht. Durch die Bänder werden Teile der Luftkissenanordnung miteinander verbunden, so daß die Bänder und die zugeordneten Luftkissenbereiche gespannt werden.

Zur Befüllung der Gaskissenanordnung, welche aus einem Gaskissen oder aus mehreren Gaskissen besteht und sich über die gesamte Länge der Fahrzeuginnenseite erstreckt, kann ein Gasgenerator, insbesondere Hybridgasgenerator, vorgesehen sein, der im Bereich der A-Säule angeordnet ist. Ausgehend vom Gasgenerator erstreckt sich über die gesamte Länge der Gaskissenanordnung ein Füllrohr (Lanze), insbesondere im Bereich der oberen Kante der Luftkissenanordnung. Durch dieses Füllrohr erfolgt das Einblasen des Füllgases in das Gaskissen. Auch bei dieser Ausführungsform kann der Spannungsverlauf in der Gaskissenanordnung durch geeignete Einschnürungen, z. B. Abnäher im Kissengewebe, erzeugt werden.

Bei einer weiteren Ausführungsform wird durch entsprechende Anordnung der Verankerungspunkte am jeweiligen Gaskissen ein etwa diagonaler Spannungsverlauf durch das im wesentlichen rechtekkig ausgebildete Gaskissen erzeugt. Bei dieser Ausführungsform ist das Gaskissen in seinem Ruhezustand diagonal gefaltet. Durch diese diagonale Grundfaltung wird eine bevorzugt vom vorderen Verankerungspunkt in der A-Säule ausgehende Verspannung des Gaskissens gegebenenfalls über ein zwischen dem Gaskissen und dem vorderen Verankerungspunkt angeordnetes Spannband erreicht.

Zur Verlängerung der Haltezeit der Luftkissenanordnung kann innerhalb eines jeweiligen Gaskissens der Gaskissenanordnung ein weiteres Gaskissen vorgesehen sein, das im aufgeblasenen Zustand etwa die Form des jeweiligen äußeren Gaskissens hat. Das Aufblasen des inneren Gaskissens erfolgt zeitlich nach dem Aufblasen des äußeren Gaskissens. Hierzu kann ein Gasgenerator oder können mehrere Gasgeneratoren vorgesehen sein, welche durch den beim Aufblasen der äußeren Gaskissenanordnung wirksamen Druck betätigt werden. Es ist auch möglich, zweistufige Gasgeneratoren zum Füllen der beiden Gaskissen bzw. Gaskissenanordnungen vorzusehen.

Anhand der Figuren wird an Ausführungsbeispielen die Erfindung noch näher erläutert. Es zeigt:
- Fig. 1:: ein erstes Ausführungsbeispiel in Seitenansicht;
- Fig. 2:: ein zweites Ausführungsbeispiel in Seitenansicht;
- Fig. 3:: einen Ausschnitt aus dem Ausführungsbeispiel der Fig. 2 in Draufsicht;
- Fig. 4:: ein drittes Ausführungsbeispiel;
- Fig. 5:: ein viertes Ausführungsbeispiel im Ruhezustand;
- Fig. 6:: das Ausführungsbeispiel der Fig. 5 in einer ersten Aufblasphase;
- Fig. 7:: das Ausführungsbeispiel der Fig. 5 in einer zweiten Aufblasphase;
- Fig. 8:: das Ausführungsbeispiel der Fig. 5 in einer dritten Aufblasphase;
- Fig. 9:: eine Gasgeneratoranordnung, welche beim Ausführungsbeispiel der Fig. 5 zum Einsatz kommt;
- Fig. 10:: eine spezielle Ausführungsform für einen Gasgenerator des Ausführungsbeispiels der Fig. 5;
- Fig. 11:: ein Ausführungsbeispiel für eine Gasgeneratoranordnung des Ausführungsbeispiels der Fig. 5;
- Fig. 12:: ein fünftes Ausführungsbeispiel; und
- Fig. 13:: ein sechstes Ausführungsbeispiel.

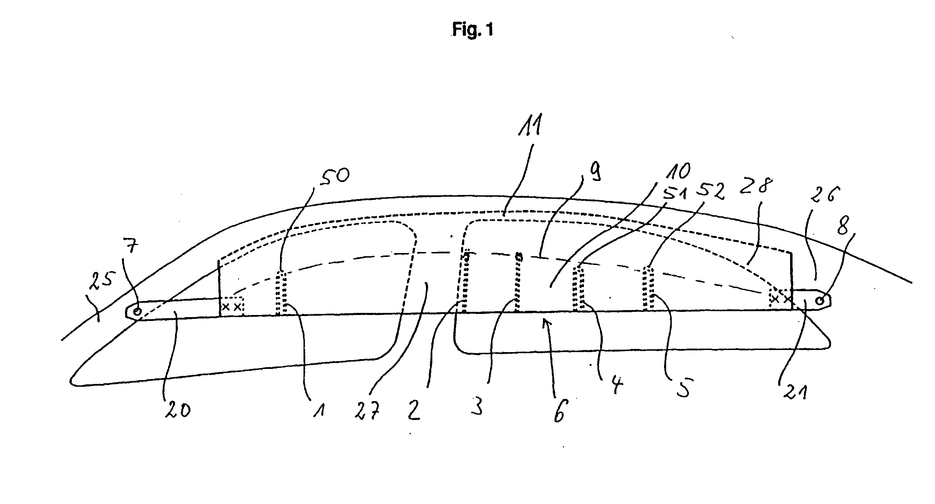

Bei dem in der Fig. 1 dargestellten Ausführungsbeispiel ist eine Gaskissenanordnung 6 vorgesehen, welche sich im entfalteten und aufgeblasenen Zustand im wesentlichen entlang der gesamten Innenseite des Fahrzeugs erstreckt. Die Luftkissenanordnung 6 besteht aus einem durchgehenden einzigen Gaskissen. Das Gaskissen ist am Fahrzeugaufbau, insbesondere an einer A-Säule 25 des Fahrzeugs in einem vorderen Verankerungspunkt 7 und einem hinteren Verankerungspunkt 8 an einer C-Säule 26 des Fahrzeugaufbaus befestigt. Zwischen dem vorderen Verankerungspunkt 7 und der Vorderseite der Gaskissenanordnung 6 erstreckt sich ein vorderes Spannband. Zwischen dem hinteren Verankerungspunkt 8 und der Rückseite der Gaskissenanordnung 6 erstreckt sich ein hinteres Spannband 21.

Im Ruhezustand ist das Gaskissen der Gaskissenanordnung 6 gefaltet und im seitlichen Dachkantenbereich, beispielsweise wie es in der EP 0 694 444 A2 gezeigt ist, im Fahrzeuginnern untergebracht. Im aufgeblasenen Zustand, welcher in der Fig. 1 gezeigt ist, bleibt die Gaskissenanordnung 6 an ihrer Oberseite im wesentlichen entlang ihrer gesamten Längsausdehnung im Bereich der seitlichen Dachkante verankert. Eine weitere Verankerung im unteren Bereich der Gaskissenanordnung 6 wird durch die Verankerungspunkte 7 und 8 und die Spannbänder 20 und 21 erreicht.

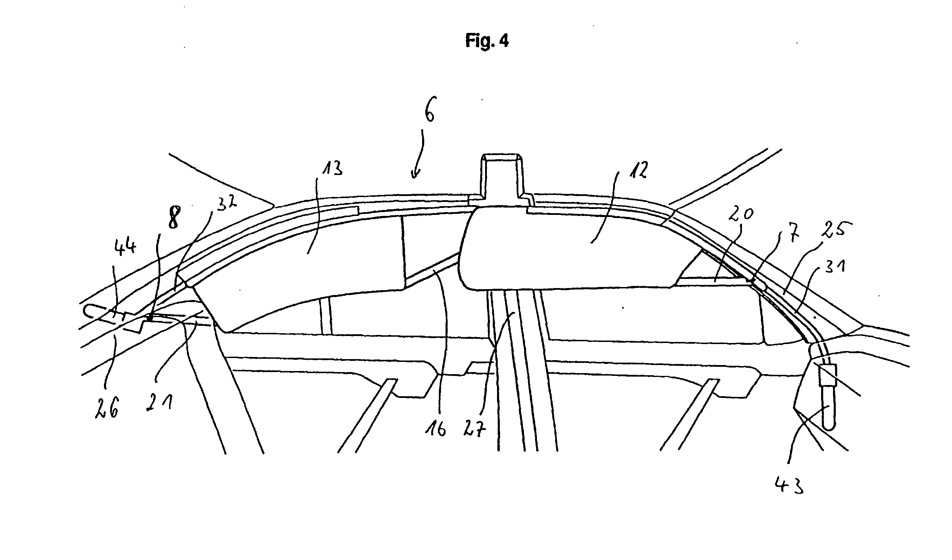

Das Gaskissen der Gaskissenanordnung 6 besitzt in seinem unteren Bereich, der sich zwischen den Spannbändern 20 und 21 und den Verankerungspunkten 7 und 8 erstreckt, Einschnürungen 1 bis 5, welche durch Abnäher im Gaskissengewebe erreicht werden. Beim dargestellten Ausführungsbeispiel erstrekken sich die Einschnürungen 1 bis 5 etwa in vertikaler Richtung. Diese Richtung entspricht beim dargestellten Ausführungsbeispiel der Einblasrichtung beim-Aufblasen des Gaskissens. Hierzu ist ein an den Dachkantenverlauf angepaßtes Füllrohr mit Einblasöffnungen vorgesehen. Es können auch zwei Füllrohre vorgesehen sein. Die Zufuhr des Füllgases erfolgt von einem oder mehreren Gasgeneratoren. Wenn ein Gasgenerator zum Befüllen vorgesehen ist, kann dieser im Bereich der B-Säule angeordnet sein und ein vorderes und hinteres Füllrohr mit Füllgas beschicken, wie es beispielsweise in der deutschen Patentanmeldung 195 42 436.0 beschrieben ist. Es ist jedoch auch möglich, einen Gasgenerator im Bereich der A-Säule 25 und einen weiteren Gasgenerator im Bereich der C-Säule 26 vorzusehen, wie es im noch zu erläuternden Ausführungsbeispiel der Fig. 4 gezeigt ist, und die Befüllung des Füllrohres bzw. der beiden Füllrohre von diesen Gasgeneratoren aus zu bewerkstelligen.

Der Verlauf der Einschnürungen 1 bis 5 muß nicht unbedingt in vertikaler Richtung ausgerichtet sein, wie es das Ausführungsbeispiel der Fig. 1 zeigt. Es ist auch möglich, einen schrägen Verlauf der Einschnürungen vorzusehen, wobei der Verlauf an die jeweilige Einblasrichtung, die am Ort der Einschnürung vorliegt, angepaßt ist. Durch die Einschnürungen 1 bis 5 wird ein Gaskissenbereich 10 mit verringertem Füllvolumen geschaffen. Ferner verbleibt ein Gaskissenbereich 11 mit unverringertem Füllvolumen, das allein durch das umgebende Gewebe des Gaskissens bestimmt ist. Im Grenzbereich zwischen dem Gaskissenbereich 10 mit dem verringerten Füllvolumen und dem Gaskissenbereich 11 mit dem unverringerten Füllvolumen bildet sich ein Spannungsbereich, welcher schematisch durch eine Spannungslinie 9 in der Fig. 1 gekennzeichnet ist. Dieser Spannungsverlauf erstreckt sich im wesentlichen in Längsrichtung der Gaskissenanordnung 6 und kann, wie es in der Fig. 1 dargestellt ist, einen bogenförmigen Verlauf haben. Der Spannungsverlauf erstreckt sich zwischen den Verankerungspunkten 7, 8 und den gegebenenfalls zwischengeschalteten Spannbändem 20, 21.

Beim dargestellten Ausführungsbeispiel liegt der Gaskissenbereich mit dem verringerten Füllvolumen, in welchem sich die Einschnürungen 1 bis 5 befinden, im unteren Teil der Gaskissenanordnung 6 und der Gaskissenbereich 11 mit unverringertem Füllvolumen im oberen Teil der Gaskissenanordnung 6. Es ist jedoch auch möglich, den Gaskissenbereich 10 mit dem verringerten Füllvolumen oben und den Gaskissenbereich 11 mit dem unverringerten Füllvolumen unten in der Gaskissenanordnung vorzusehen.

Bei einer speziellen Ausführunsform wird das einzige Gaskissen der Gaskissenanordnung 6 von einem nicht näher dargestellten Gasgenerator, welcher im Instrumententafelbereich angeordnet ist, aufgeblasen. Das Füllvolumen beträgt ca. 20 bis 25 Liter. Beim Aufblasen ergibt sich eine Luftkissenkontraktion in der Längsausdehnung von ca. 150 mm, wodurch die erforderliche Spannwirkung in der Gaskissenanordnung 6 zwischen den Verankerungspunkten 7 und 8 zusätzlich zu der oberen Verankerung im Dachkantenbereich erreicht wird. Das durchgehende Gaskissen der Gaskissenanordnung 6 bietet einen durchgehenden Aufprallschutz im Bereich des vorderen Fensters und des hinteren Fensters sowie im Bereich der B-Säule 27 und gegebenenfalls eines schräg verlaufenden Fensterrahmens 28 im Fonds des Fahrzeugs.

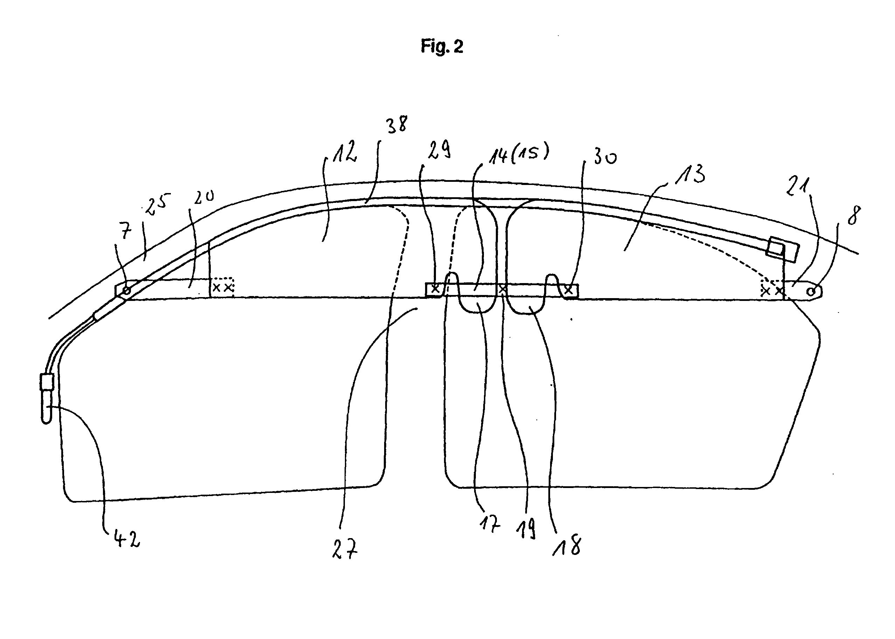

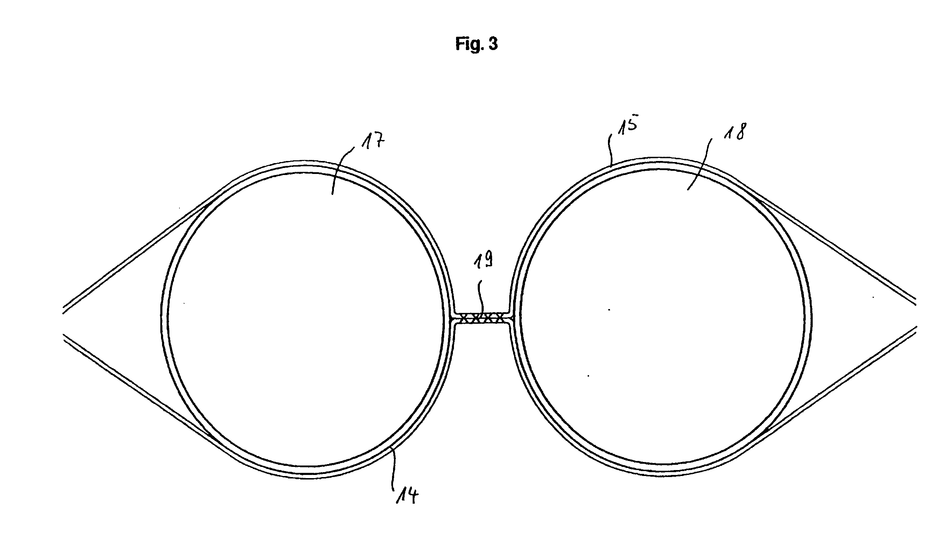

Bei dem in den Figuren 2 und 3 dargestellten Ausführungsbeispiel sind zwei Gaskissen 12 und 13 vorgesehen. Das vordere Gaskissen 12, welches sich im aufgeblasenen Zustand im wesentlichen über das Fenster der Vordertür und die B-Säule 27 erstreckt, ist über das vordere Spannband 20 mit dem vorderen Verankerungspunkt 7 an der A-Säule 25 verbunden. Das hintere Gaskissen 13, welches im aufgeblasenen Zustand im wesentlichen im Fenster des Fahrzeugfonds einen Seitenaufprallschutz bildet, ist über das hintere Spannband 21 mit dem hinteren Verankerungspunkt 8 verbunden. Die beiden Gaskissen 12 und 13 können in ihrer Form gleichgestaltet sein und spiegelbildlich im Fahrzeug angeordnet sein. Die Befüllung der Gaskissen erfolgt durch einen, z.B. als Hybridgasgenerator ausgebildeten Gasgenerator 42 und ein sich über im wesentlichen die gesamte Länge der Gaskissenanordnung 6 erstreckendes Füllrohr 38.

Die beiden Gaskissen 12 und 13 sind über Bänder 14 und 15 miteinander verbunden. Wie insbesondere aus der Fig. 3 zu ersehen ist, sind die Bänder 14 und 15 beidseits von Gaskissenteilen 17 und 18 angeordnet und zwischen den beiden Gaskissenteilen an einer Verbindungsstelle 19 miteinander verbunden. Zwei weitere Verbindungsstellen 29 und 30 sind an den jeweiligen Enden der Bänder 14 und 15 mit den Gaskissen 12 und 13 vorgesehen. Die beiden Bänder 14 und 15 liegen etwa in der Fluchtlinie der beiden Verankerungspunkte 7 und 8 und der Spannbänder 20 und 21. Wie aus der Fig. 3 zu ersehen ist, verkürzt sich beim Aufblasen der Gaskissen und insbesondere beim Aufblasen der Gaskissenteile 17 und 18 (zusätzliche Blasrüssel mit etwa 120 mm Durchmesser) die Ausdehnung der Bänder 14 und 15 in Fahrzeuglängsrichtung. Dies wird bewirkt durch die seitliche Ausbauchung der Bänder 14 und 15 beim Aufblasen der Gaskissenteile 17 und 18. Hierdurch wird eine Verspannung der Gaskissenanordnung, welche von den beiden Gaskissen 12 und 13 gebildet wird, zwischen den Verankerungspunkten 7 und 8 und den Spannbändern 20 und 21 erreicht. Die Verkürzung der Gaskissenanordnung 6 beim Aufblasen kann etwa 130 mm betragen. Auch beim Ausführungsbeispiel der Fig. 2 kann eine Verspannung zwischen der A-Säule und der C-Säule des Fahrzeugs erfolgen.

Bei dem in der Fig. 4 dargstellten Ausführungsbeispiel besteht die Gaskissenanordnung 6 ebenfalls aus einem vorderen Gaskissen 12 und einem hinteren Gaskissen 13. Die beiden Gaskissen sind über ein einzelnes Band 16 miteinander verbunden. Die Befüllung der beiden Gaskissen erfolgt durch Gasgeneratoren 43 und 44. Der Gasgenerator 43 ist im Instrumententafelbereich angeordnet. Der Gasgenerator 44 ist im Bereich der C-Säule 26 angeordnet. Die Befüllung der Gaskissen 12 und 13 erfolgt über Füllrohre (Lanzen) 31 und 32. Im aufgeblasenen Zustand ist die Gaskissenanordnung 6 aufgrund der seitlichen Ausdehnung der Gaskissen 12 und 13 beim Aufblasen und der sich dabei ergebenden Verkürzung in Fahrzeuglängsrichtung zwischen den Verankerungspunkten 7 und 8 und den Spannbändern 20 und 21 erzeugt. Zusätzlich können in den Gaskissen 12 und 13 Einschnürungen wie beim Ausführungsbeispiel der Fig. 1 vorgesehen sein.

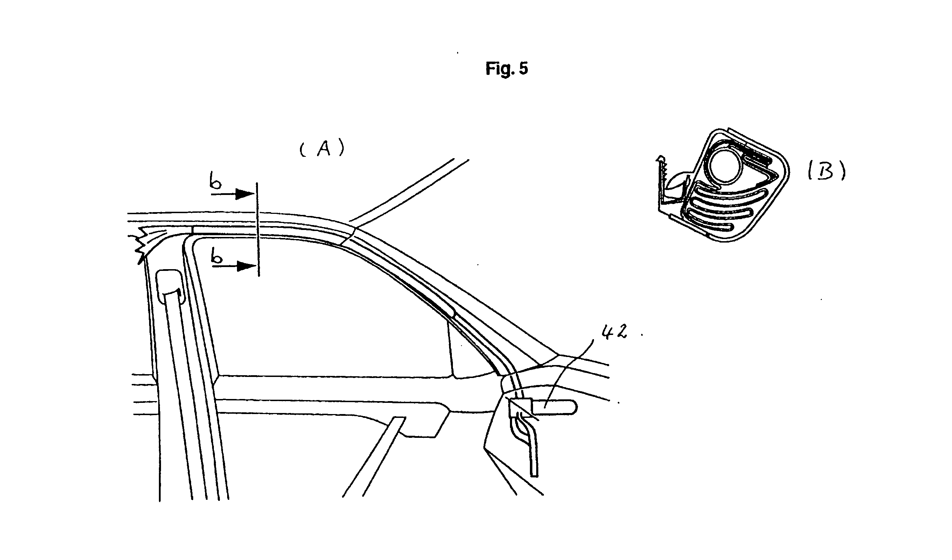

Bei dem in den Figuren 5 bis 11 erläuterten Ausführungsbeispielen ist im jeweiligen Gaskissen der Gaskissenanordnung ein weiteres Gaskissen angeordnet, welches im aufgeblasenen Zustand etwa die Form des äußeren Gaskissens hat. In den Figuren ist die Anordnung der beiden ineinander liegenden Gaskissen für das vordere Gaskissen 12 dargestellt. In den jeweiligen Ansichten (A) der Figuren 5 bis 8 ist die Seitenansicht und in den jeweiligen Ansichten (B) der Figuren 5 bis 8 ist eine schnittbildliche Darstellung der Gaskissenanordnung entlang der jeweiligen Schnittlinien b-b dargestellt.

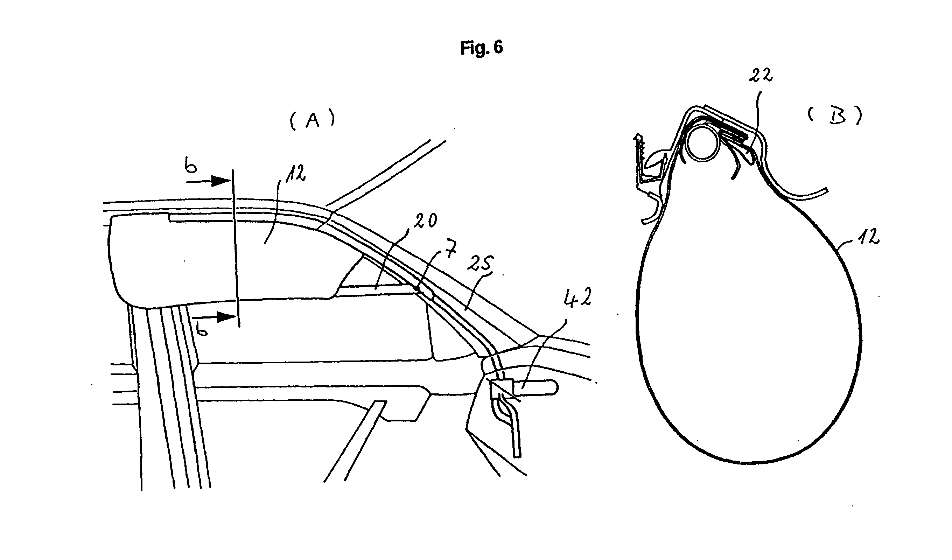

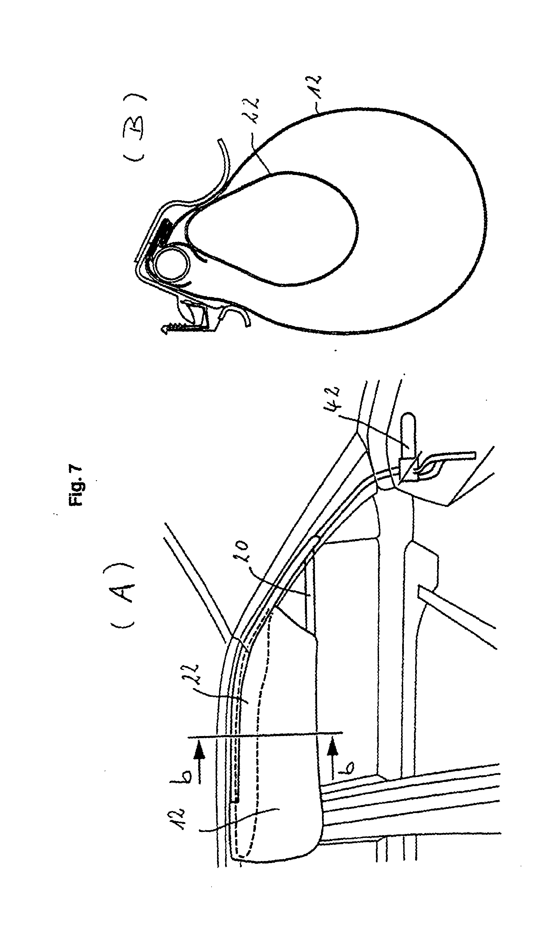

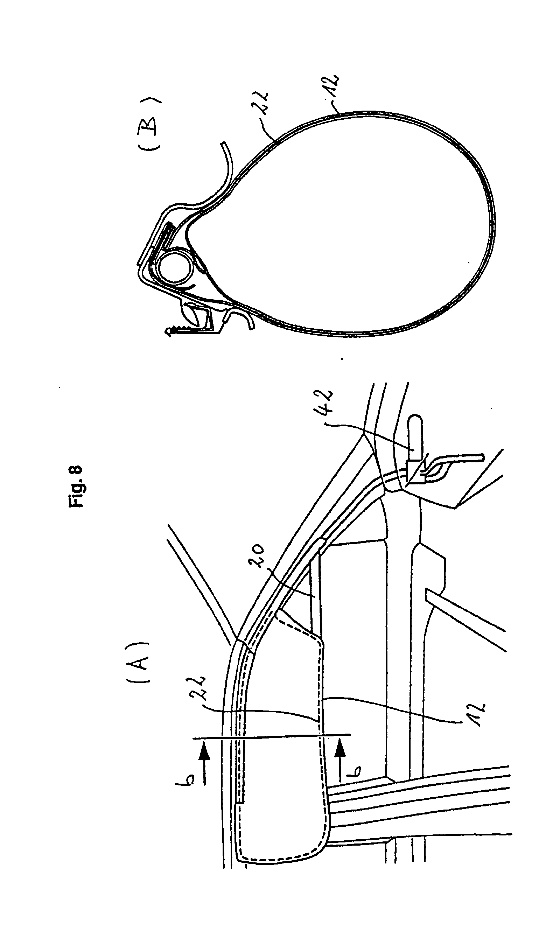

In der Fig. 5 ist der Ruhezustand der Gaskissenanordnung gezeigt. Die Gaskissenanordnung ist in einer Verkleidung mit Hilfe einer Klemmeinrichtung im Bereich des oberen Türrahmens an der Karosserie befestigt. Beim Füllen mit Hilfe des Gasgenerators 42 wird zunächst das äußere Gaskissengewebe des Gaskissens 12 aufgeblasen (Fig. 6 A und B). Dieser Zustand wird etwa nach 15 ms erreicht. Der gleiche Zustand ergibt sich für das nicht näher dargestellte hintere Gaskissen 13. In diesem Zustand beginnt das Aufblasen eines inneren Gaskissens 22 (Fig. 6B und 7A, B). Nach einer Zeit von ca. 800 ms ist das innere Gaskissen 22 vollständig gefüllt, wie es in Fig. 8 (A) und (B) dargestellt ist.

Durch die Anordnung des inneren Gaskissens 22 wird eine Verlängerung der Haltezeit der Gaskissenanordnung, welche zwischen den beiden Verankerungspunkten 7 und 8 aufgespannt ist und im seitlichen Dachkantenbereich über die gesamte Länge 7 befestigt ist, erreicht. Beim Aufblasen der beiden Gaskissen, nämlich des äußeren Gaskissens 12 und des inneren Gaskissens 22 kann der Gasgenerator 42, welcher im Bereich der A-Säule bzw. im Instrumententafelbereich angeordnet ist, zweistufig ausgebildet sein, so daß in der ersten Stufe (Fig. 6) das äußere Gaskissen 12 und in der zweiten Stufe (Fig. 8) das innere Gaskissen 22 aufgeblasen wird.

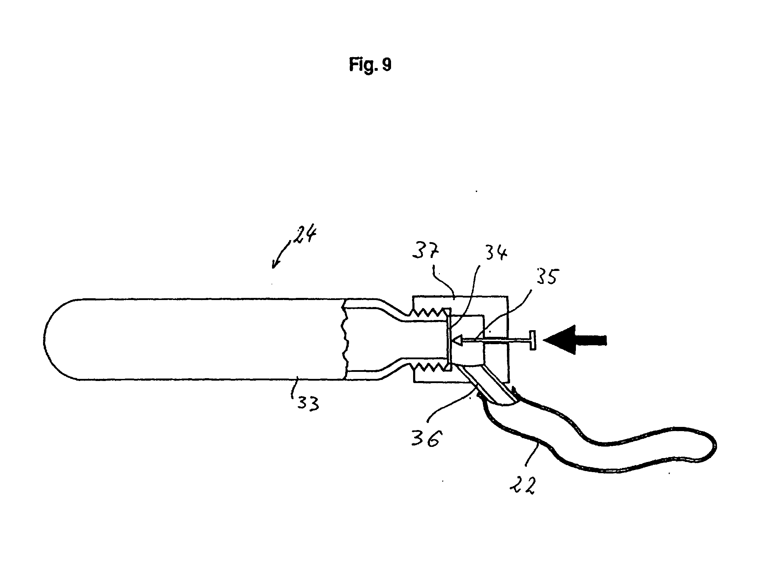

In den Figuren 9 bis 11 ist ein weiteres Ausführungsbeispiel für das zweistufige Aufblasen des in den Figuren 5 bis 8 dargestellten Ausführungsbeispiels gezeigt.

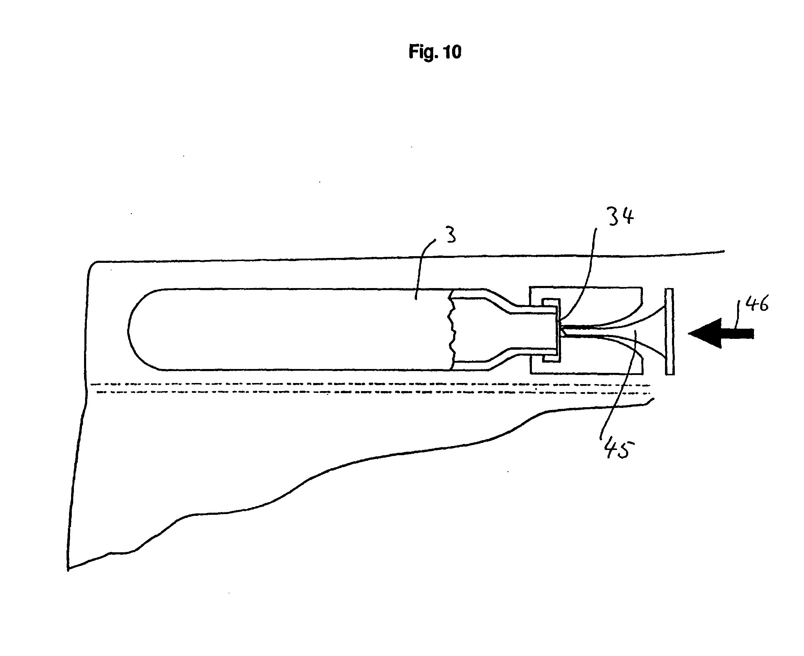

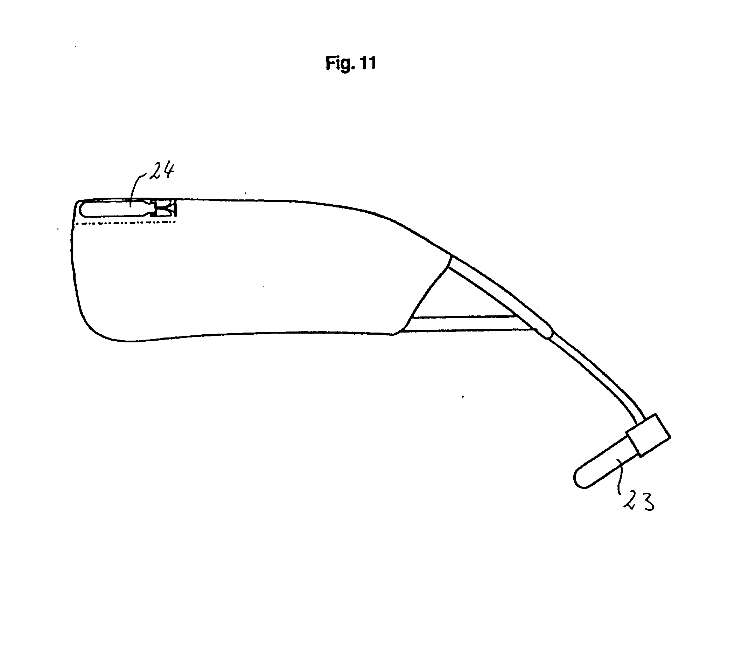

In der Fig. 11 ist die Gesamtanordnung des Aufblassystems gezeigt. Dieses enthält einen ersten Gasgenerator 23 für die primäre Füllung des äußeren Gaskissens bis zu dem in Fig. 6 dargestellten Zustand. Ferner ist ein zweiter Gasgenerator 24 vorgesehen für die sekundäre Füllung, bei welcher das innere Gaskissen 22 gefüllt wird. Der Gasgenerator 24, welcher in den Figuren 9 und 10 dargestellt ist, besitzt einen Gasbehälter 33, in welchem das Füllgas unter Druck in Bereitschaft gehalten wird. Ein Verschluß 34 kann mit Hilfe eines spitzen Stößels 35 geöffnet werden. Zur Betätigung des Stößels 35 wird der Druck ausgenützt, welcher zur primären Füllung des äußeren Gaskissens 12 angewendet wurde. Dieser Druck wirkt auf den Stößel 35, welcher an seiner Spitze den Verschluß 34 öffnet. Das Füllgas in der Gasflasche 33 kann entweichen und durch ein Einblasrohr 36 in das innere Gaskissen 22 eingeblasen werden. Bei der Ausführungsform der Fig. 9 ist das innere Gaskissen 22 auf das Einblasrohr 36 aufgesetzt. Das Einblasrohr 36 und der durch Druck betätigbare Stößel 35 sind an einem Adapter 37 vorgesehen, welcher auf den Verschluß 34 der Gasflasche 33 aufschraubbar ist.

Bei der in der Fig. 10 dargestellten Ausführungsform wird zum Öffnen des Verschlusses 34 der Gasflasche 33 eine spitz zulaufende Druckkanüle 45 verwendet, die durch den Druck bei der Primärfüllung des äußeren Gaskissens in Richtung eines Pfeiles 46 in den Verschluß 34, welcher beispielsweise als Berstboden ausgebildet ist, eingedrückt wird. Durch den Druckkanülenhohlraum kann dann das Füllgas in das an die Kanüle angeschlossene innere Gaskissen eindringen.

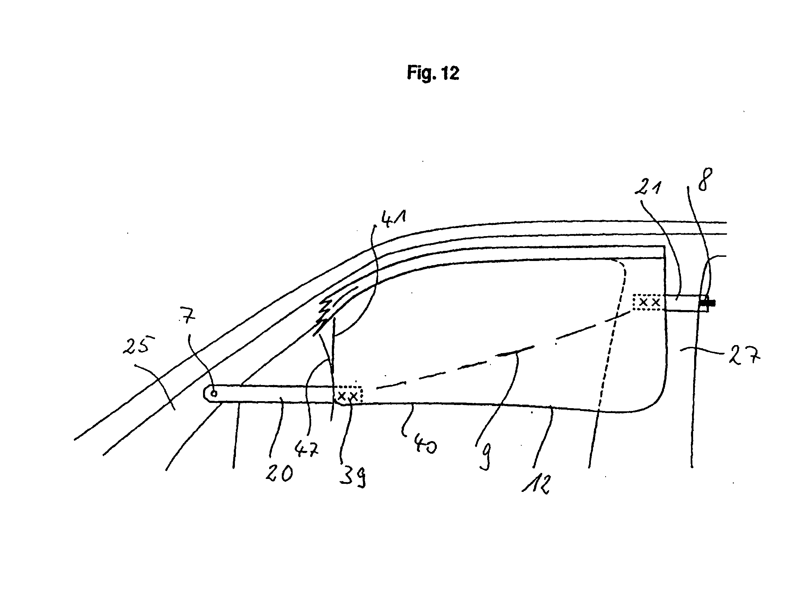

Bei dem in der Fig. 12 dargestellten Ausführungsbeispiel wird ein etwa diagonal verlaufender Spannungsverlauf 9 im aufgeblasenen Gaskissen 12 erreicht. Der Spannungsverlauf erstreckt sich zwischen dem vorderen Verankerungspunkt 7 an der A-Säule 25 und der B-Säule 27. Eine Verbindungsstelle 39 zwischen dem vorderen Spannband 20 und dem Gaskissen 12 liegt in der unteren Ecke, welche von einer Unterkante 40 und einer Vorderkante 41 des Gaskissens 12 gebildet wird. Die hintere Verankerungsstelle 8 ist über das hintere Spannband 21 mit dem Gaskissen 12 verbunden.

In der Ruheposition (gefalteter Zustand) besitzt das Gaskissen 12 eine diagonale Grundfaltung (Diagonalfaltung). Durch diese diagonale Grundfaltung des Gaskissens 12 wird die Verspannung des Spannbandes 20 vom vorderen Verankerungspunkt 7 erreicht.

Beim Aufblasen des Gaskissens 12 bewegt sich die Verbindungsstelle 39 auf einem Kreisbogen 47. Der Mittelpunkt dieses Kreisbogens 47 liegt im Verankerungspunkt 7. An der B-Säule 27 wird eine vorzugsweise formschlüssige Abstützung des Gaskissens 12 vorgesehen.

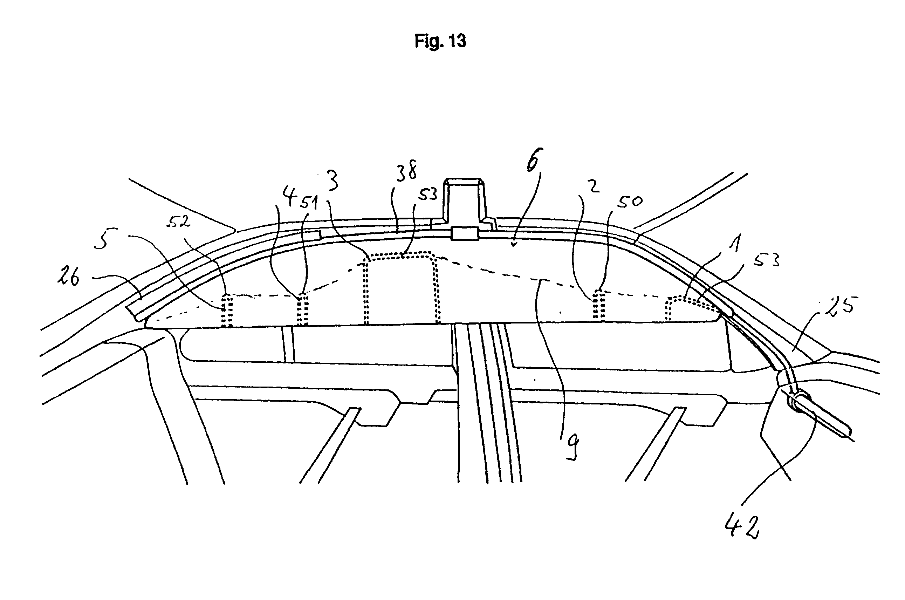

Bei dem in der Fig. 13 dargestellten Ausführungsbeispiel besteht die Gaskissenanordnung aus einem einzigen Gaskissen, das sich zwischen der A-Säule 25 und der C-Säule 26 des Kraftfahrzeuges erstreckt. Im Gaskissen sind die speziellen Abnäher 1, 2, 3, 4 und 5, welche den gewünschten Spannungsverlauf 9 herstellen, vorgesehen. Die Befüllung des Gaskissens erfolgt durch einen Gasgenerator 42, welcher im Bereich der A-Säule vorgesehen ist. Dieser Gasgenerator ist bevorzugt als Hybridgasgenerator ausgebildet. Das vom Gasgenerator 42 erzeugte Füllgas wird über ein durchgehendes Füllrohr (Lanze) 38, welches sich entlang der Oberseite der Gaskissenanordnung 6 erstreckt, in das Innere der Gaskissenanordnung 6 geleitet. Wie schon erläutert, wird durch die Abnäher 1 bis 5 die Verspannung der Gaskissenanordnung 6 zwischen der A-Säule 25 und der C-Säule 26 im aufgeblasenen Zustand, der in der Fig. 13 dargestellt ist, erreicht.

Aus dem Ausführungsbeispiel der Fig. 13 und aus dem Ausführungsbeispiel der Fig. 1 ergibt sich, daß die Einschnürungen 1 - 5 von umgeführten Abnähern gebildet sind. Die Abnäher erstrecken sich dabei im wesentlichen in senkrechter Richtung, wobei jeweils zwei parallele Abnäher mit einer Umkehrstelle 50, 51, 52 (in Fig. 1) und 50 - 53 (in Fig. 13) gebildet sind. Die Einschnürungen 1, 4, 5 (in Fig. 1) und 2, 4, 5 (in Fig. 13) werden von zwei relativ nahe beieinander liegenden parallelen Abnähern, die sich im wesentlichen in vertikaler Richtung in der aufgeblasenen Gaskissenanordnung 6 erstrecken, gebildet. Über abgerundete Umlenkstellen 50, 51, 52 sind die beiden Abnäher an ihren oberen Enden miteinander verbunden. Auch die Umlenkstellen sind Bestandteil der Abnäher, die mit vertikalen Teilen fortlaufende Nähte bilden.
Die in Fig. 13 dargestellte Einschnürung 3 wird von einem rechteckigen, etwa quadratischen Abnäher gebildet. Dieser besitzt zwei parallel sich vertikal erstreckende Nähte, die über eine etwa horizontal verlaufende geradlinige Naht 53 miteinander verbunden sind. Die oberen Ecken sind dabei abgerundet. Der Abnäher, welcher in der Fig. 13 die Einschnürung 1 in der Nähe der vorderen Verankerungsstelle der Gaskissenanordnung 6 bildet, ist etwa dreieckförmig ausgebildet, wobei eine Umkehrstelle von einem schräg verlaufenden etwa geradlinigen Bereich 53 gebildet wird. Dieser geradlinige Bereich weist gegenüber der Horizontalen einen spitzen Winkel auf.

Die fortlaufenden Nähte der Abnäher, welche die Einschnürungen 1 bis 5 bilden, beginnen am unteren Rand der Gaskissenanordnung 6 und erstrecken sich etwa in vertikaler Richtung bis zur Umkehrstelle 50 - 53 und kehren zurück zum unteren Rand der Gaskissenanordnung 6. Der Spannungsverlauf 9 wird dabei gebildet durch die Breite in horizontaler Richtung sowie durch die Höhe der jeweiligen Einschnürung, wie das aus den Figuren 1 und 13 zu ersehen ist.

Durch die Umkehrstellen 50 - 53 der die Einschnürungen 1 bis 5 bildenden Abnäher wird die beim Aufblasvorgang erforderliche Festigkeit der Einschnürungen gewährleistet, so daß diese den gewünschten Spannungsverlauf im gefüllten Gaskissen herstellen.

## Patentansprüche

1. Airbagvorrichtung mit einer von wenigstens einem Gasgenerator (23, 24; 42) aufblasbaren Gaskissenanordnung (6), welche im Dachkantenbereich einer Fahrzeugkarosserie befestigbar ist und im aufgeblasenen Zustand einen seitlichen Aufprallschutz bildet, wobei die Gaskissenanordnung (6) zwischen einem vorderen und hinteren Verankerungspunkt (7, 8) entlang einem durch die Form der aufgeblasenen Gaskissenanordnung (6) sich zwangsläufig ergebenden Spannungsverlauf (9) gespannt ist, **dadurch gekennzeichnet, daß** die Gaskissenanordnung (6) im aufgeblasenen Zustand sich im wesentlichen über die gesamte Länge einer Fahrzeugseite im Innenraum erstreckt und im Bereich der A-Säule (25) und der C-Säule (26) des Fahrzeugs verankert ist, daß zur Befüllung der Gaskissenanordnung (6) ein dem Dachkantenverlauf angepaßtes sich im wesentlichen über die gesamte Länge der Gaskissenanordnung (6) erstreckendes Füllrohr (38) mit Einblasöffnungen an der oberen Kante der Gaskissenanordnung vorgesehen ist und daß in dem Gaskissengewebe das Füllvolumen begrenzende linienförmige Einschnürungen (1 bis 5) vorgesehen sind, die sich teilweise über die vertikale Ausdehnung der aufgeblasenen Gaskissenanordnung (6) erstrecken.

2. Airbagvorrichtung nach Anspruch 1, **dadurch gekennzeichnet, daß** die Einschnürungen (1 - 5) sich etwa in Gaseinblasrichtung beim Füllen der Gaskissenanordnung (6) erstrecken.

3. Airbagvorrichtung nach Anspruch 1 oder 2, **dadurch gekennzeichnet, daß** die Gaskissenanordnung (6) von einem durchgehenden Gaskissen gebildet ist.

4. Airbagvorrichtung nach einem der Ansprüche 1 bis 3, **dadurch gekennzeichnet, daß** die Gaskissenanordnung (6) wenigstens zwei miteinander verbundene Gaskissen (12, 13) aufweist.

5. Airbagvorrichtung nach Anspruch 4, **dadurch gekennzeichnet, daß** die wenigstens zwei Gaskissen (12, 13) separat an einem etwa horizontal verlaufenden Fahrzeugkarosserieteil im Bereich der Dachkante montierbar sind.

6. Airbagvorrichtung nach Anspruch 4 oder 5, **dadurch gekennzeichnet, daß** wenigstens zwei Gaskissen (12, 13) die gleiche Form aufweisen und spiegelbildlich an einer Fahrzeugseite anzuordnen sind.

7. Airbagvorrichtung nach einem der Ansprüche 1 bis 6, **dadurch gekennzeichnet, daß** die Verspannung der Gaskissenanordnung durch eine beim Aufblasen sich ergebende Verkürzung der Längsausdehnung der Gaskissenanordnung (6) in Fahrzeuglängsrichtung gebildet ist.

8. Airbagvorrichtung nach einem der Ansprüche 4 bis 7, **dadurch gekennzeichnet, daß** das hintere Gaskissen (13) mit der C-Säufe (26) und das vordere Gaskissen (12) mit der A-Säule (25) des Fahrzeugs zu verbinden ist.

9. Airbagvorrichtung nach einem der Ansprüche 4 bis 8, **dadurch gekennzeichnet, daß** die wenigstens zwei Gaskissen (12, 13) durch wenigstens ein Band (14, 15; 16) miteinander verbunden sind.

10. Airbagvorrichtung nach einem der Ansprüche 1 bis 9, **dadurch gekennzeichnet, daß** die Verkürzung der Gaskissenanordnung (6) in Fahrzeuglängsrichtung durch die Vergrößerung der Breite wenigstens eines Teils der Gaskissenanordnung (6) erzeugt wird.

11. Airbagvorrichtung nach einem der Ansprüche 4 bis 10, **dadurch gekennzeichnet, daß** wenigstens ein Gaskissenteil (17, 18) zwischen zwei die Verspannung aufnehmenden Bändern (14, 15) angeordnet ist und daß beim Aufblasen des wenigstens einen Gaskissenteils (17, 18) die Ausdehnung der Bänder (14, 15) in Verspannungsrichtung sich verkürzt.

12. Airbagvorrichtung nach einem der Ansprüche 4 bis 11, **dadurch gekennzeichnet, daß** die wenigstens zwei Gaskissen (12, 13) mit zwei Bändern (14, 15) verbunden sind und daß zwischen den beiden Bändern zur Verkürzung ihrer Längsausdehnung beim Aufblasen wenigstens ein Gaskissenteil (17, 18) angeordnet ist.

13. Airbagvorrichtung nach Anspruch 11 oder 12, **dadurch gekennzeichnet, daß** die beiden Bänder (14, 15) in ihrer Mitte miteinander verbunden sind (Verbindungsstelle 19) und vor und hinter der Verbindungsstelle (19) die Längsausdehnung der beiden Bänder (14, 15) verkürzende Gaskissenteile (17, 18) angeordnet sind.

14. Airbagvorrichtung nach einem der Ansprüche 1 bis 13, **dadurch gekennzeichnet, daß** innerhalb jeweiliger Gaskissen der Gaskissenanordnung (6) eine innere Gaskissenanordnung (22) vorgesehen ist, die im aufgeblasenen Zustand etwa die Form der äußeren Gaskissenanordnung (6) hat und zeitlich nach der äußeren Gaskissenanordnung (22) aufblasbar ist.

15. Airbagvorrichtung nach Anspruch 14, **dadurch gekennzeichnet, daß** die innere Gaskissenanordnung (22) durch wenigstens einen Gasgenerator (24) aufblasbar ist, welcher durch den beim Aufblasen der äußeren Gaskissenanordnung (6) wirksamen Druck betätigbar ist.

16. Airbagvorrichtung nach Anspruch 14, **dadurch gekennzeichnet, daß** wenigstens ein zweistufiger Gasgenerator zum Füllen der beiden Gaskissenanordnungen (6, 22) vorgesehen ist.

17. Airbagvorrichtung nach einem der Ansprüche 1 bis 16, **dadurch gekennzeichnet, daß** die zwischen der A- und C-Säule verspannbare Gaskissenanordnung (6) durch einen im Bereich der A-Säule (25) angeordneten Gasgenerator (42) füllbar ist.

18. Airbagvorrichtung nach einem der Ansprüche 1 bis 17, **dadurch gekennzeichnet, daß** die jeweiligen Gasgeneratoren (42;43,44) als Hybridgasgeneratoren ausgebildet sind.

19. Airbagvorrichtung nach einem der Ansprüche 1 bis 18, **dadurch gekennzeichnet, daß** der Spannungsverlauf (9) am jeweiligen Gaskissen (12,13) etwa diagonal verläuft.

20. Airbaganordnung nach Anspruch 19, **dadurch gekennzeichnet, daß** der diagonale Spannungsverlauf durch die Positionen der Verankerungspunkte (7,8, Fig. 12) bestimmt ist.

21. Airbagvorrichtung nach Ansprüche 19 oder 20, **dadurch gekennzeichnet, daß** das Gaskissen mit einem Verankerungspunkt (7) über ein Spannband (20) verbunden ist und daß eine Verbindungsstelle (39) des Spannbandes (20) mit dem Gaskissen (12) beim Aufblasen sich auf einem Kreisbogen (47) bewegt.

22. Airbagvorrichtung nach einem der Ansprüche 19 bis 21, **dadurch gekennzeichnet, daß** das Gaskissen in seiner Ruheposition, das heißt im gefalteten Zustand, eine Diagonalfaltung aufweist, die durch die Lage der Verankerungspunkte (7,8) am Gaskissen (12) bzw. an den Enden der Spannbänder (20,21, Fig. 12) bestimmt ist.

23. Airbagvorrichtung nach Anspruch 21, **dadurch gekennzeichnet, daß** der Mittelpunkt des Kreisbogens (47), um den sich die Verbindungsstelle (39) beim Aufblasen des Gaskissens (12) bewegt, der vordere Verankerungspunkt (7) des Gaskissens an der A-Säule (25) ist.

24. Airbagvorrichtung nach Anspruch 21 oder 23, **dadurch gekennzeichnet, daß** die mit dem vorderen Verankerungspunkt (7) verbundene Verbindungsstelle (39) in der Ecke, welche durch Unterkante (40) und Vorderkante (41) des Gaskissens (12) gebildet wird, angeordnet ist und der hintere Verankerungspunkt (8) des Gaskissens in einer Höhenlage in der oberen Hälfte des Gaskissens (12) befindet und mit der hinteren Kante des Gaskissens verbunden ist.

25. Airbagvorrichtung nach einem der Ansprüche 1 bis 24, **dadurch gekennzeichnet, daß** die Einschnürungen (1 - 5) von umgeführten Abnähern gebildet sind.

26. Airbagvorrichtung nach Anspruch 25, **dadurch gekennzeichnet, daß** die Abnäher der Einschnürungen (1 - 5) in ihren im wesentlichen vertikalen Verlauf in der aufgeblasenen Gaskissenanordnung (6) Umkehrstellen (50 - 54) aufweisen.

27. Airbagvorrichtung nach Anspruch 25 oder 26, **dadurch gekennzeichnet, daß** die Umkehrstellen (50 - 54) abgerundete Bereiche aufweisen.

28. Airbagvorrichtung nach einem der Ansprüche 25 bis 27, **dadurch gekennzeichnet, daß** die jeweilige Einschnürung (1 - 5) zwei im wesentlichen vertikal verlaufende Abnäher aufweist, die durch eine Umkehrstelle (50 - 54) miteinander verbunden sind.

29. Airbagvorrichtung nach einem der Ansprüche 25 bis 28, **dadurch gekennzeichnet, daß** die jeweilige Umkehrstelle einen geradlinigen Bereich (53) aufweist.

30. Airbagvorrichtung nach Anspruch 29, **dadurch gekennzeichnet, daß** der geradlinige Bereich (53) der Umkehrstelle etwa horizontal oder gegenüber der Horizontalen im spitzen Winkel verläuft.

31. Airbagvorrichtung nach einem der Ansprüche 25 bis 29, **dadurch gekennzeichnet, daß** die jeweilige Einschnürung (3) von Abnähern, die in Viereckform angeordnet sind, gebildet ist.

## Claims

1. Airbag device with a gas cushion arrangement (6) which can be inflated by at least one gas generator (23, 24; 42), and which can be fastened in the roof edge region of a vehicle body and, once inflated, forms lateral impact protection, wherein the gas cushion arrangement (6) is tensioned between a front and rear anchor point (7, 8) along a tension distribution course (9) produced inevitably by the shape of the inflated gas cushion arrangement (6), **characterised in that** the gas cushion arrangement (6), once inflated, extends substantially over the entire length of a side of the vehicle in the interior and is anchored in the region of the A-column (25) and the C-column (26) of the vehicle, **in that**, for inflating the gas cushion arrangement (6), an inflation pipe (38) which is adapted to the course of the roof edge and extends substantially over the entire length of the gas cushion arrangement (6) is provided with inlet orifices at the upper edge of the gas cushion arrangement and **in that** linear constrictions (1 to 5) which limit the inflation volume and partially extend over the vertical dimension of the inflated gas cushion arrangement (6) are provided in the gas cushion fabric.

2. Airbag device according to claim 1, **characterised in that** the constrictions (1 to 5) extend substantially in the gas inlet direction during inflation of the gas cushion arrangement (6).

3. Airbag device according to claim 1 or 2, **characterised in that** the gas cushion arrangement (6) is formed by a continuous gas cushion.

4. Airbag device according to one of claims 1 to 3, **characterised in that** the gas cushion arrangement (6) comprises at least two gas cushions (12, 13) which are connected to one another.

5. Airbag device according to claim 4, **characterised in that** the at least two gas cushions (12, 13) can be mounted separately on a substantially horizontally extending vehicle body part in the region of the roof edge.

6. Airbag device according to claim 4 or 5, **characterised in that** at least two gas cushions (12, 13) have the same shape and are to be arranged in a mirror image on a side of the vehicle.

7. Airbag device according to one of claims 1 to 6, **characterised in that** the bracing of the gas cushion arrangement is formed by a shortening in the length dimension of the gas cushion arrangement (6) in the longitudinal direction of the vehicle, which occurs during inflation.

8. Airbag device according to one of claims 4 to 7, **characterised in that** the rear gas cushion (13) is to be connected to the C-column (26) and the front gas cushion (12) to the A-column (25) of the vehicle.

9. Airbag device according to one of claims 4 to 8, **characterised in that** the at least two gas cushions (12, 13) are connected to one another by at least one strap (14, 15; 16).

10. Airbag device according to one of claims 1 to 9, **characterised in that** the shortening of the gas cushion arrangement (6) in the longitudinal direction of the vehicle is produced by the enlargement of the width of at least one part of the gas cushion arrangement (6).

11. Airbag device according to one of claims 4 to 10, **characterised in that** at least one gas cushion part (17, 18) is arranged between two straps (14, 15) which receive the bracing and **in that** the dimension of the straps (14, 15) decreases in the bracing direction during inflation of the at least one gas cushion part (17, 18).

12. Airbag device according to one of claims 4 to 11, **characterised in that** the at least two gas cushions (12, 13) are connected to two straps (14, 15) and **in that** at least one gas cushion part (17, 18) is arranged between the two straps in order to shorten their length dimension during inflation.

13. Airbag device according to claim 11 or 12, **characterised in that** the two straps (14, 15) are connected to one another in their centre (connecting point 19) and gas cushion parts (17, 18) which shorten the length dimension of the two straps (14, 15) are arranged in front of and behind the connecting point (19).

14. Airbag device according to one of claims 1 to 13, **characterised in that** an internal gas cushion arrangement (22) which, once inflated, has substantially the form of the external gas cushion arrangement (6) and can be inflated in time after the external gas cushion arrangement (22) is provided within respective gas cushions of the gas cushion arrangement (6).

15. Airbag device according to claim 14, **characterised in that** the internal gas cushion arrangement (22) can be inflated by at least one gas generator (24) which can be actuated by the pressure acting during inflation of the external gas cushion arrangement (6).

16. Airbag device according to claim 14, **characterised in that** at least one two-stage gas generator is provided for inflating the two gas cushion arrangements (6, 22).

17. Airbag device according to one of claims 1 to 16, **characterised in that** the gas cushion arrangement (6) which can be braced between the A- and C-columns can be inflated by a gas generator (42) arranged in the region of the A-column (25).

18. Airbag device according to one of claims 1 to 17, **characterised in that** the respective gas generators (42; 43, 44) are designed as hybrid gas generators.

19. Airbag device according to one of claims 1 to 18, **characterised in that** the tension course (9) on the respective gas cushion (12, 13) extends substantially diagonally.

20. Airbag arrangement according to claim 19, **characterised in that** the diagonal tension course is determined by the positions of the anchor points (7, 8, Fig. 12).

21. Airbag device according to claim 19 or 20, **characterised in that** the gas cushion is connected to an anchor point (7) via a tensioning strap (20) and **in that** a connecting point (39) of the tensioning strap (20) moves over an arc of a circle (47) with the gas cushion (12) during inflation.

22. Airbag device according to one of claims 19 to 21, **characterised in that** the gas cushion, in its rest position, in other words in the folded state, has diagonal folding which is determined by the position of the anchor points (7, 8) on the gas cushion (12) or at the ends of the tensioning straps (20, 21, Fig. 12).

23. Airbag device according to claim 21, **characterised in that** the centre of the arc (47), around which the connecting point (39) moves during inflation of the gas cushion (12), is the front anchor point (7) of the gas cushion on the A-column (25).

24. Airbag device according to claim 21 or 23, **characterised in that** the connecting point (39) connected to the front anchor point (7) is arranged in the comer formed by lower edge (40) and front edge (41) of the gas cushion (12) and the rear anchor point (8) of the gas cushion is located at a height in the upper half of the gas cushion (12) and is connected to the rear edge of the gas cushion.

25. Airbag device according to one of claims 1 to 24, **characterised in that** the constrictions (1 to 5) are formed by looping darts.

26. Airbag device according to claim 25, **characterised in that** the darts of the constrictions (1 to 5) have deflection points (50 to 54) in their substantially vertical course in the inflated gas cushion arrangement (6).

27. Airbag device according to claim 25 or 26, **characterised in that** the deflection points (50 to 54) have rounded regions.

28. Airbag device according to one of claims 25 to 27, **characterised in that** the respective constriction (1 to 5) has two substantially vertically extending darts which are connected to one another by a deflection point (50 to 54).

29. Airbag device according to one of claims 25 to 28, **characterised in that** the respective deflection point has a rectilinear region (53).

30. Airbag device according to claim 29, **characterised in that** the rectilinear region (53) of the deflection point extends substantially horizontally or at an acute angle to the horizontal.

31. Airbag device according to one of claims 25 to 29, **characterised in that** the respective constriction (3) is formed by darts arranged in a square form.

## Revendications

1. Dispositif de coussin gonflable (coussin d'air) comportant un dispositif de coussin à gaz (6) pouvant être gonflé par au moins un générateur de gaz (23, 24; 42) , pouvant être fixé dans la zone du bord du toit de la carrosserie d'un véhicule et constituant à l'état gonflé une protection latérale contre les chocs, le dispositif de coussin à gaz (6) étant tendu entre un point d'ancrage avant et un point d'ancrage arrière (7,8), le long d'un tracé de tension (9) résultant forcément par suite de la forme du dispositif de coussin à gaz gonflable (6), **caractérisé en ce que** le dispositif de coussin à gaz (6) s'étend à l'état gonflé pratiquement sur l'ensemble de la longueur d'un côté du véhicule dans l'espace intérieur et est ancré dans la zone de la colonne A (25) et de la colonne C (26) du véhicule, **en ce qu'**un tuyau de remplissage (38) comportant des orifices de soufflage est agencé sur le bord supérieur du dispositif de coussin à gaz, servant au remplissage du dispositif de coussin à gaz (6), adapté au tracé du bord du toit et s'étendant pour l'essentiel sur l'ensemble de la longueur du dispositif de coussin à gaz (6), et **en ce que** le tissu du coussin à gaz comporte des resserrements linéaires (1 à 5) limitant le volume de remplissage, s'étendant partiellement sur l'extension verticale du dispositif de coussin à gaz gonflé (6).

2. Dispositif de coussin gonflable selon la revendication 1, **caractérisé en ce que** les resserrements (1 à 5) s'étendent pratiquement dans la direction de soufflage du gaz lors du remplissage du dispositif de coussin à gaz (6).

3. Dispositif de coussin gonflable selon les revendications 1 ou 2, **caractérisé en ce que** le dispositif de coussin à gaz (6) est formé par un coussin à gaz continu.

4. Dispositif de coussin gonflable selon l'une des revendications 1 à 3, **caractérisé en ce que** le dispositif de coussin à gaz (6) comporte au moins deux coussins à gaz reliés (12, 13).

5. Dispositif de coussin gonflable selon la revendication 4, **caractérisé en ce que** les au moins deux coussins à gaz (12, 13) peuvent être montés séparément sur une partie de la carrosserie du véhicule à extension pratiquement horizontale dans la zone du bord du toit.

6. Dispositif de coussin gonflable selon les revendications 4 ou 5, **caractérisé en ce que** les au moins deux coussins à gaz (12, 13) ont la même forme et sont agencés de manière symétrique sur un côté du véhicule.

7. Dispositif de coussin gonflable selon l'une des revendications 1 à 6, **caractérisé en ce que** la tension du dispositif de coussin à gaz est établie par un raccourcissement de l'extension longitudinale du dispositif de coussin à gaz (6) dans la direction longitudinale du véhicule, résultant du gonflement.

8. Dispositif de coussin gonflable selon l'une des revendications 4 à 7, **caractérisé en ce que** le coussin à gaz arrière (13) doit être relié à la colonne C (26), le coussin à gaz avant (12) devant être relié à la colonne A (25) du véhicule.

9. Dispositif de coussin gonflable selon les revendications 4 à 8, **caractérisé en ce que** les au moins deux coussins à gaz (12, 13) sont reliés par au moins une bande (14, 15; 16).

10. Dispositif de coussin gonflable selon l'une des revendications 1 à 9, **caractérisé en ce que** le raccourcissement du dispositif de coussin à gaz (6) dans la direction longitudinale du véhicule est entraîné par l'accroissement de la largeur d'au moins une partie du dispositif de coussin à gaz (6).

11. Dispositif de coussin gonflable selon l'une des revendications 4 à 10, **caractérisé en ce qu'**au moins une partie du coussin à gaz (17, 18) est agencée entre deux bandes (14, 15) absorbant la tension et **en ce que** lors du gonflement de la au moins une partie du coussin à gaz (17, 18), l'extension des bandes (14, 15) est raccourcie dans la direction de la tension.

12. Dispositif de coussin gonflable selon l'une des revendications 4 à 11, **caractérisé en ce que** les au moins deux coussins à gaz (12, 13) sont reliés par deux bandes (14, 15), au moins une partie du coussin à gaz (17, 18) étant agencée entre les deux bandes en vue du raccourcissement de leur extension longitudinale lors du gonflement.

13. Dispositif de coussin gonflable selon l'une des revendications 11 ou 12, **caractérisé en ce que** les deux bandes (14, 15) sont reliées au niveau de leur centre (point de jonction 19), des parties du coussin à gaz (17, 18) raccourcissant l'extension longitudinale des deux bandes (14, 15) étant agencées devant et derrière le point de jonction (19).

14. Dispositif de coussin gonflable selon l'une des revendications 1 à 13, **caractérisé en ce qu'**à l'intérieur des coussins à gaz correspondants du dispositif de coussin à gaz (6) est agencé un dispositif de coussin à gaz interne (22), ayant à l'état gonflé pratiquement la forme du dispositif de coussin à gaz externe (6) et étant gonflé après le gonflement du dispositif de coussin à gaz externe (22).

15. Dispositif de coussin gonflable selon la revendication 14, **caractérisé en ce que** le dispositif de coussin à gaz interne (22) peut être gonflé par au moins un générateur de gaz (24), pouvant être actionné par la pression produite lors du gonflement du dispositif de coussin à gaz externe (6).

16. Dispositif de coussin gonflable selon la revendication 14, **caractérisé en ce qu'**il comporte au moins un générateur de gaz à deux phases pour le remplissage des deux dispositifs de coussin à gaz (6, 22).

17. Dispositif de coussin gonflable selon l'une des revendications 1 à 16, **caractérisé en ce que** le dispositif de coussin à gaz (6) tendu entre les colonnes A et C peut être rempli par l'intermédiaire d'un générateur de gaz (42) agencé dans la zone de la colonne A (25).

18. Dispositif de coussin gonflable selon l'une des revendications 1 à 17, **caractérisé en ce que** les générateurs de gaz correspondants (42; 43, 44) ont la forme de générateurs de gaz hybrides.

19. Dispositif de coussin gonflable selon l'une des revendications 1 à 18, **caractérisé en ce que** le tracé de tension (9) a une allure pratiquement diagonale pour le coussin à gaz correspondant (12, 13).

20. Dispositif de coussin gonflable selon la revendication 19, **caractérisé en ce que** le tracé de tension diagonal est déterminé par les positions des points d'ancrage (7, 8, figure 12).

21. Dispositif de coussin gonflable selon les revendications 19 ou 20, **caractérisé en ce que** le coussin à gaz est relié à un point d'ancrage (7) par une bande de tension (20), un point de jonction (39) de la bande de tension (20) se déplaçant lors du gonflement avec le coussin à gaz (12) dans un arc de cercle (47).

22. Dispositif de coussin gonflable selon l'une des revendications 19 à 21, **caractérisé en ce que** dans son état de repos, c'est-à-dire dans l'état plié, le coussin à gaz comporte un pliage diagonal, déterminé par la position des points d'ancrage (7, 8) sur le coussin à gaz (12) et au niveau des extrémités des bandes de tension (20, 21, figure 12).

23. Dispositif de coussin gonflable selon la revendication 21, **caractérisé en ce que** le centre de l'arc de cercle (47) autour duquel se déplace le point de jonction (39) lors du gonflement du coussin à gaz (12) est constitué par le point d'ancrage avant (7) du coussin à gaz sur la colonne A (25).

24. Dispositif de coussin gonflable selon les revendications 21 ou 23, **caractérisé en ce que** le point de jonction (39) relié au point d'ancrage avant (7) est agencé dans le coin, formé par le bord inférieur (40) et le bord avant (41) du coussin à gaz (12), le point d'ancrage arrière (8) du coussin à gaz étant agencé en hauteur dans la moitié supérieure du coussin à gaz (12) et étant relié au bord arrière du coussin à gaz.

25. Dispositif de coussin gonflable selon l'une des revendications 1 à 24, **caractérisé en ce que** les resserrements (1-5) sont formés par des coutures-pinces de contournement.

26. Dispositif de coussin gonflable selon la revendication 25, **caractérisé en ce que** les coutures-pinces des resserrements (1-5) comportent des points d'inversion (50 - 54) dans leur tracé essentiellement vertical dans le dispositif de coussin à gaz gonflé (6).

27. Dispositif de coussin gonflable selon les revendications 25 ou 26, **caractérisé en ce que** les points d'inversion (50-54) comportent des zones arrondies.

28. Dispositif de coussin gonflable selon l'une des revendications 25 à 27, **caractérisé en ce que** le resserrement correspondant (1 - 5) comporte deux coutures-pinces à extension essentiellement verticale, reliées par un point d'inversion (50-54).

29. Dispositif de coussin gonflable selon l'une des revendications 25 à 28, **caractérisé en ce que** le point d'inversion correspondant comporte une zone droite (53).

30. Dispositif de coussin gonflable selon la revendication 29, **caractérisé en ce que** la zone droite (53) du point d'inversion s'étend de manière pratiquement horizontale ou à angle aigu par rapport à l'horizontale.

31. Dispositif de coussin gonflable selon l'une des revendications 25 à 29, **caractérisé en ce que** le resserrement correspondant (3) est formé par des coutures-pinces, agencées sous une forme rectangulaire.
